# EUROPEAN PATENT APPLICATION

(11) **EP 4 837 685 A1**
(43) Date of publication of application: **11.11.2026**
(21) Application number: 26166508.7
(22) Date of filing: 20.03.2026
(51) Int. Cl.: B23K 9/133, B23K 9/12, B23K 9/32

(54) **PORTABLE WELDING WIRE FEEDER AND SEPARABLE WIRE SOURCE**

(30) Priority: 07.04.2025 US 202563784554 P; 13.03.2026 US 202619566504
(71) Applicant: Illinois Tool Works Inc., Glenview IL 60025 (US)
(72) Inventor: CHRISTOPHER, Mark, Glenview, 60025 (US); LAHTI, Thomas D., Glenview, 60025 (US)
(74) Representative: HGF

(57) **Abstract**

Disclosed example portable wire feeders include: a freestanding feeder case; a connector configured to connect the feeder case to a freestanding source case of a wire source. The connector includes: a rail or a slot on an exterior of the first side of the feeder case, the rail or the slot configured to engage the other of the rail or the slot on a wire source housing by sliding the rail into the slot. The wire feeders further include a releasable lock configured to engage to secure the rail and the slot against disengagement; one or more drive rolls within the feeder case, the one or more drive rolls configured to drive the wire to a welding torch; and a wire guide configured to guide the wire received from the wire source to the one or more drive rolls.

## Description

### RELATED APPLICATIONS

The present application claims the benefit of U.S. Provisional Patent Application Serial No. 63/784,554, filed April 7, 2025, entitled "PORTABLE WELDING WIRE FEEDERS AND SEPARABLE WIRE SOURCES." The entirety of U.S. Provisional Patent Application Serial No. 63/784,554 is expressly incorporated herein by reference.

### FIELD OF THE DISCLOSURE

This disclosure relates generally to welding wire feeders and, more particularly, to portable welding wire feeders and separable wire sources.

### BACKGROUND

In some welding-type applications, a welding wire feeder may be used to feed welding wire from a wire spool to a welding torch for a welding operation. In some welding-type operations, it may be desirable for welding wire feeders to be portable. In some welding-type operations, it may be desirable to easily replace wire spools and/or change between different types of wire.

### SUMMARY

The present disclosure relates generally to welding systems and, more particularly, to portable welding wire feeders and separable wire sources, substantially as illustrated by and described in connection with at least one of the figures, as set forth more completely in the claims.

### DRAWINGS

FIG. 1 illustrates a welding-type system employing a portable wire feeder and a portable wire spool housing.
FIG. 2 illustrates an example implementation of the portable wire feeder and the portable wire source of the welding-type system of FIG. 1.
FIG. 3 is a more detailed illustration of the connectors of the portable wire feeder and the portable wire source of FIG. 2.
FIG. 4 is a side cross-section elevation view of the portable wire feeder and the portable wire source of FIG. 2.
FIG. 5 is a front cross-section elevation view of the connectors of FIG. 2.
FIG. 6 is a top plan view of the portable wire feeder and the portable wire source of FIG. 2.
FIG. 7 is a top cross-section plan view of the connectors of FIG. 2.
FIG. 8 is a perspective view of another example implementation of the portable wire feeder and the portable wire source of the welding-type system of FIG. 1.
FIG. 9 is a top plan view of the example the portable wire feeder and the portable wire source of the welding-type system of FIG. 1.

The figures are not necessarily to scale. Where appropriate, similar or identical reference numbers are used to refer to similar or identical components.

### DETAILED DESCRIPTION

In some welding-type operations, such as gas metal arc welding (GMAW), welding wire may be fed by a wire feeder to a torch for a welding operation. In some applications or work sites, it may be desirable to move the wire feeder to different locations at the work site in order to avoid driving the wire from the wire feeder to the torch over a long distance. Therefore, it is desirable for wire feeders to be portable. Conventional systems may use portable "suitcase" wire feeders. Conventional suitcase wire feeders include a wire spool hub, a wire spool, and the drive components enclosed within a common housing. Example suitcase wire feeders are generally described in U.S. Patent Application Publication No. 2011/0114613, titled "Compact Welding Wire Feeder," by Jeffery Ray Ihde et. al. The entirety of U.S. Patent Application Publication No. 2011/0114613 is incorporated herein by reference.

The portability of wire feeders is typically limited by the ability of a welding operator or other personnel to physically carry the wire feeder. As a result, wire feeder portability may be limited by the weight of the spool and the drive components. Therefore, conventional suitcase feeders are not typically designed to use relatively large spools of welding wire, for example fifty or sixty pound spools of wire. Some industries, such as certain construction sites, rail, mining, and off-shore sites use such relatively large spools of wire, and therefore do not use conventional suitcase feeders. With larger spools of wire, wire feeders are typically relatively stationary given their high weight.

The present disclosure relates to a wire feeder system that includes a separate enclosure for a spool of wire (e.g., a fifty or sixty pound spool of welding wire). The enclosure for the spool of wire is separate from and connectable to a portable wire feeder. The portable wire feeder may be significantly lighter than a conventional wire feeder, because the spool of wire is separated from the drive components. Accordingly, both the enclosure for the spool of wire and the wire feeder are easily portable. Additionally, new spools can be conveniently replaced when a welding spool is exhausted. Additionally, the wire feeder may include a more powerful feed motor as compared to a conventional suitcase feeder, because the portability of the wire feeder is not constrained by the weight of the spool, and therefore a larger motor may be included within the wire feeder without exceeding threshold weight limits of portability. Therefore, the wire feeder of the present disclosure may feed wires of a larger diameter as compared to conventional suitcase wire feeders.

Disclosed example wire feeders and wire spool housings are also quick and easy to connect and disconnect, and provide a secure attachment during welding operations. In some examples, the wire feeder and the wire spool housing are connected using a rail and slot system, which establishes a rigid connection between the wire feeder and the wire spool housing and aligns the wire outlet of the wire spool housing with the wire inlet of the wire feeder.

According to aspects of this disclosure, example portable wire feeders include: a freestanding feeder case having a wire inlet on a first side of the feeder case; a connector on the first side of the feeder case configured to connect the feeder case to a freestanding source case of a wire source, wherein the source case is physically independent from the feeder case and the feeder case is physically independent and separately portable from the source case, wherein the connector comprises a rail or a slot on an exterior of the first side of the feeder case, the rail or the slot configured to engage the other of the rail or the slot on a wire source housing by sliding the rail into the slot; a releasable lock configured to engage to secure the rail and the slot against disengagement, wherein the wire inlet is configured to receive wire from a connected wire source when the rail and the slot are fully engaged and the releasable lock is engaged; one or more drive rolls within the feeder case, the one or more drive rolls configured to drive the wire to a welding torch; and a wire guide configured to guide the wire received from the wire source to the one or more drive rolls.

In some example wire feeders, the slot includes a tapered surface configured to guide the rail to a predetermined engaged position. In some example wire feeders, the connector includes the slot, and the releasable lock includes a plunger coupled to the slot and biased to automatically engage when the rail is moved to the predetermined engaged position in the slot. In some example wire feeders, the connector includes the rail, and the releasable lock includes an aperture configured to engage a plunger on the slot of the source case.

In some example wire feeders, the wire inlet is within a circumference of the slot, and the rail comprises an aperture to pass the wire through the connector to the wire inlet. In some example wire feeders, the wire feeder is configured to receive between 0.030 inch wire and 0.125 inch wire from the wire source.

According to additional aspects of this disclosure, example portable welding wire spool housings include: a freestanding source case that is separately portable and physically independent from a portable wire feeder; a spool support within the source case, the spool support configured to support a spool of welding wire and to enable the spool to rotate to pay out the welding wire from the spool; an outlet to enable the welding wire to be withdrawn from the source case by the wire feeder; a connector on the first side of the source case configured to connect the source case to a freestanding feeder case of the wire feeder, wherein the connector comprises a rail or a slot on an exterior of the first side of the source case, the rail or the slot configured to engage the other of the rail or the slot on the feeder case by sliding the rail into the slot; and a releasable lock configured to engage to secure the rail and the slot against disengagement, wherein the outlet is configured to pay out wire when the rail and the slot are fully engaged and the releasable lock is engaged.

Some example portable welding wire spool housings further include a sensor configured to determine an amount of welding wire remaining in the spool, in which the sensor provides an indication to a control circuit when the amount of welding wire remaining is less than a threshold amount. In some example portable welding wire spool housings the slot includes a tapered surface configured to guide the rail to a predetermined engaged position. In some example portable welding wire spool housings, the connector includes the slot, and the releasable lock includes a plunger coupled to the slot and biased to automatically engage when the rail is moved to the predetermined engaged position in the slot.

In some example portable welding wire spool housings, the connector includes the rail, and the releasable lock comprises an aperture configured to engage a plunger on the slot of the source case. In some example portable welding wire spool housings, the outlet is within a circumference of the slot, and the rail includes an aperture to pass wire through the connector to a wire inlet of the wire feeder.

Some example portable welding wire spool housings further include a wire guide configured to guide the welding wire from the spool supported on the spool support to the outlet. In some example portable welding wire spool housings, the source case does not include a motor.

According to additional aspects of this disclosure, example wire feeding systems include: a wire source housing having: a freestanding source case; a spool support within the source case configured to support a welding wire spool; and a first connector on the first side of the source case, including at least one of: a rail on an exterior of the first side of the source case; or a slot on the exterior of the first side of the source case; a wire feeder having: a freestanding feeder case; one or more drive rolls within the feeder case, the one or more drive rolls configured to drive wire to a welding torch; and a second connector configured to connect to the first connector, the second connector including the other of the rail or the slot, in which the rail is configured to engage the slot by sliding the rail into the slot; and a releasable lock configured to engage to secure the wire source housing and the wire feeder against disengagement.

In some example wire feeding systems, the slot includes a tapered surface configured to guide the rail to a predetermined engaged position. In some example wire feeding systems, the wire feeder includes the slot, the wire source housing includes the rail, and the releasable lock includes a plunger coupled to the slot and biased to automatically engage when the rail is moved to a predetermined engaged position in the slot. In some example wire feeding systems, the wire feeder includes the rail, the wire source housing includes the slot, and the releasable lock includes a plunger coupled to the slot and biased to automatically engage when the rail is moved to a predetermined engaged position in the slot.

In some example wire feeding systems, the wire source housing includes an outlet through which the wire is payed out of the wire source housing, and the wire feeder includes a wire inlet through which the wire is fed into the wire feeder, and the outlet is aligned with the wire inlet when the slot is fully engaged into the rail. In some example wire feeding systems, the wire inlet and the outlet are positioned within a circumference of the slot.

The term "welding-type system," as used herein, includes any device capable of supplying power suitable for welding, plasma cutting, induction heating, CAC-A and/or hot wire welding/preheating (including laser welding and laser cladding), including inverters, converters, choppers, resonant power supplies, quasi-resonant power supplies, etc., as well as control circuitry and other ancillary circuitry associated therewith.

As used herein, the term "welding-type power" refers to power suitable for welding, plasma cutting, induction heating, CAC-A and/or hot wire welding/preheating (including laser welding and laser cladding). As used herein, the term "welding-type power supply" and/or "power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, a "circuit," or "circuitry," includes any analog and/or digital components, power and/or control elements, such as a microprocessor, digital signal processor (DSP), software, and the like, discrete and/or integrated components, or portions and/or combinations thereof.

The terms "control circuit" and "control circuitry," as used herein, may include digital and/or analog circuitry, discrete and/or integrated circuitry, microprocessors, digital signal processors (DSPs), and/or other logic circuitry, and/or associated software, hardware, and/or firmware. Control circuits or control circuitry may be located on one or more circuit boards, that form part or all of a controller, and are used to control a welding process, a device such as a power source or wire feeder, motion, automation, monitoring, air filtration, displays, and/or any other type of welding-related system.

As used, herein, the term "memory" and/or "memory device" means computer hardware or circuitry to store information for use by a processor and/or other digital device. The memory and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), flash memory, solid state storage, a computer-readable medium, or the like.

As used herein, the term "torch," "welding torch," "welding tool" or "welding-type tool" refers to a device configured to be manipulated to perform a welding-related task, and can include a hand-held welding torch, robotic welding torch, gun, or other device used to create the welding arc.

As used herein, the term "welding mode," "welding process," "welding-type process" or "welding operation" refers to the type of process or output used, such as current-controlled (CC), voltage-controlled (CV), pulsed, gas metal arc welding (GMAW), flux-cored arc welding (FCAW), gas tungsten arc welding (GTAW), shielded metal arc welding (SMAW), spray, short circuit, and/or any other type of welding process.

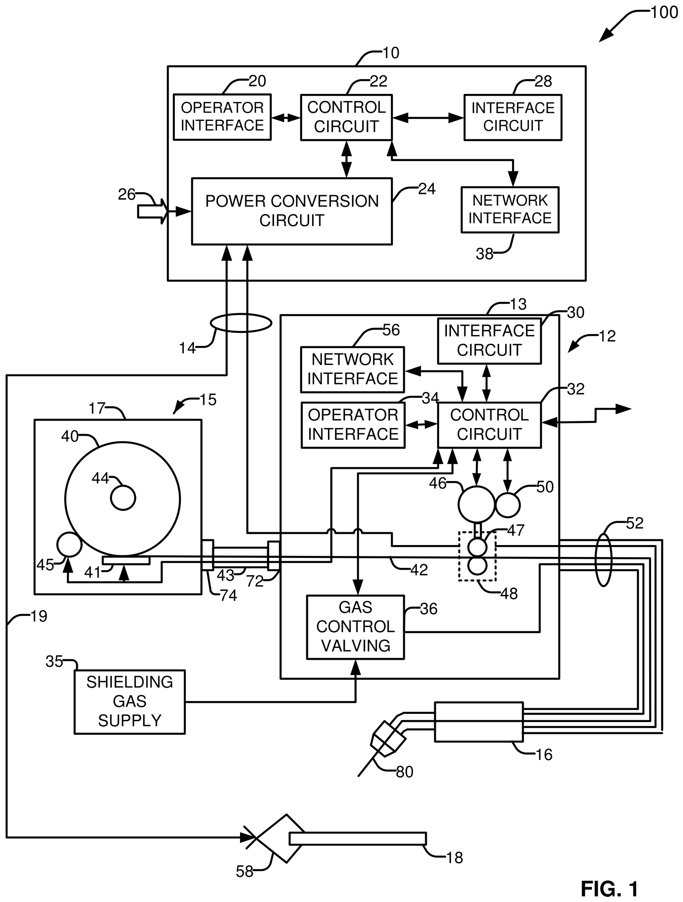

FIG. 1 illustrates an example welding system 100 for performing welding-type operations. As shown in the welding system 100 of FIG. 1, a power supply 10 and a wire feeder 12 are coupled via conductors or conduits 14. In the illustrated example, the power supply 10 is separate from the wire feeder 12, such that the wire feeder 12 may be positioned near a welding location at some distance from the power supply 10. Terminals are typically provided on the power supply 10 and on the wire feeder 12 to allow the conduits 14 to be coupled to the systems so as to allow for power and gas to be provided to the wire feeder 12 from the power supply 10, and to allow data to be exchanged between the two devices.

The system 100 is configured to provide wire from a welding wire source 15, power from the power supply 10, and shielding gas from a shielding gas supply 35, to a welding torch 16. The torch 16 may be any type of arc welding torch, (e.g., GMAW, GTAW, FCAW, SMAW) and may allow for the feed of a welding wire 42 (e.g., an electrode wire) and gas to a location adjacent to a workpiece 18. A work cable 19 is run to the welding workpiece 18 so as to complete an electrical circuit between the power supply 10 and the workpiece 18.

The welding system 100 is configured for weld settings (e.g., weld parameters, such as voltage, wire feed speed, current, gas flow, inductance, physical weld parameters, advanced welding programs, pulse parameters, etc.) to be selected by the operator and/or a welding sequence, such as via an operator interface 20 provided on the power supply 10. The operator interface 20 will typically be incorporated into a front faceplate of the power supply 10, and may allow for selection of settings such as the weld process, the type of wire to be used, voltage and current settings, and so forth. In particular, the example system 100 is configured to allow for welding with various steels, aluminum, alloys, and/or other welding wire that is channeled through the torch 16. Further, the system 100 is configured to employ welding wires with a variety of wire sizes. These weld settings are communicated to a control circuit 22 within the power supply 10. The system may be particularly adapted to implement welding regimes configured for certain electrode types.

The control circuit 22, operates to control generation of welding power output that is supplied to the welding wire 42 for carrying out the desired welding operation.

The torch 16 applies power from the power supply 10 to the welding wire 42, typically by a welding cable 52. Similarly, shielding gas from a shielding gas supply 35 is fed through the wire feeder 12 and the welding cable 52. During welding operations, the welding wire 42 is advanced through a jacket of the welding cable 52 towards the torch 16.

The work cable 19 and clamp 58 allow for closing an electrical circuit from the power supply 10 through the welding torch 16, the electrode (wire) 42, and the workpiece 18 for maintaining the welding arc during the operation.

The control circuit 22 is coupled to power conversion circuit 24. This power conversion circuit 24 is adapted to create the output power, such as pulsed waveforms applied to the welding wire 42 at the torch 16. Various power conversion circuits may be employed, including choppers, boost circuitry, buck circuitry, inverters, converters, and/or other switched mode power supply circuitry, and/or any other type of power conversion circuitry. The power conversion circuit 24 is coupled to a source of electrical power as indicated by arrow 26. The power applied to the power conversion circuit 24 may originate in the power grid, although other sources of power may also be used, such as power generated by an engine-driven generator, batteries, fuel cells or other alternative sources. The power supply 10 illustrated in FIG. 1 may also include an interface circuit 28 configured to allow the control circuit 22 to exchange signals with the wire feeder 12.

The wire feeder 12 includes a complementary interface circuit 30 that is coupled to the interface circuit 28. In some examples, multi-pin interfaces may be provided on both components and a multi-conductor cable run between the interface circuit to allow for such information as wire feed speeds, processes, selected currents, voltages or power levels, and so forth to be set on either the power supply 10, the wire feeder 12, or both. Additionally or alternatively, the interface circuit 30 and the interface circuit 28 may communicate wirelessly and/or via the weld cable.

The wire feeder 12 also includes control circuit 32 coupled to the interface circuit 30. As described below, the control circuit 32 allows for wire feed speeds to be controlled in accordance with operator selections or stored sequence instructions, and permits these settings to be fed back to the power supply via the interface circuit. The control circuit 32 is coupled to an operator interface 34 on the wire feeder that allows selection of one or more welding parameters, particularly wire feed speed. The operator interface may also allow for selection of such weld parameters as the process, the type of wire utilized, current, voltage or power settings, and so forth. The control circuit 32 may also be coupled to gas control valving 36 which regulates and measures the flow of shielding gas from the shielding gas supply 35 to the torch 16. In general, such gas is provided at the time of welding, and may be turned on immediately preceding the weld and for a short time following the weld. The shielding gas supply 35 may be provided in the form of pressurized bottles.

The wire feeder 12 includes components for feeding wire to the welding torch 16 and thereby to the welding operation, under the control of control circuit 32. As illustrated, the drive components and control components of the wire feeder 12 are included within a first housing or enclosure 13. A wire spool 40 is mounted on a spool hub 44 in a second housing or enclosure 17. The wire source 15 is physically independent from the wire feeder 12. In other words, as explained in more detail below, the wire source 15 is connectable to and disconnectable from the wire feeder 12, and the wire source 15 can be physically moved independently from the wire feeder 12.

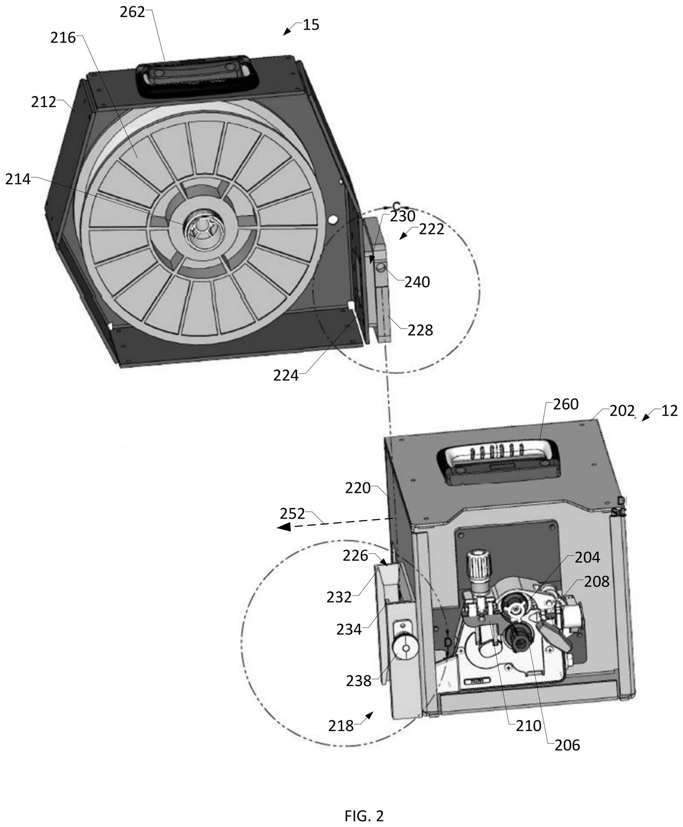

In some examples, the spool hub 44 is configured to support up to a sixty pound spool of wire and the enclosure 17 is large enough to enclose a sixty pound spool of wire. In some examples, the spool hub 44 is configured to support up to a fifty pound spool of wire and the enclosure 17 is large enough to enclose a fifty pound spool of wire. An inlet 72 of the wire feeder 12 is connected to an outlet 74 of the wire source 15 via one or more connectors 43. In some examples, the wire feeder inlet 72 is directly connected to the wire source outlet 74. For example, the wire feeder inlet 72 may include a first connector that directly connects to a second connector of the wire source outlet 74, as disclosed in more detail below with reference to FIGS. 2-9. The connectors 43 enable the welding wire 42 from the spool 40 to be fed to the drive components of the wire feeder 12. The connectors 43 may also enable one or more control cables to be connected from components within the wire source enclosure 17 to the control circuit 32.

Welding wire 42 is unspooled from the spool 40 and is progressively fed to the torch 16. The spool 40 may be associated with a clutch 45 that disengages the spool 40 when wire is to be fed from the spool 40 to the torch 16. The clutch 45 may also be regulated, for example by the control circuit 32, to maintain a minimum friction level to avoid free spinning of the spool 40. The first wire feeder motor 46 may be provided within a housing 48 that engages with wire feed rollers 47 to push wire from the wire feeder 12 towards the torch 16.

In practice, at least one of the rollers 47 is mechanically coupled to the motor 46 and is rotated by the motor 46 to drive the wire from the wire feeder 12, while the mating roller is biased towards the wire to apply adequate pressure by the two rollers to the wire. Some systems may include multiple rollers of this type. In some examples, the wire feeder 12 is configured to feed between 0.030 inch wire and 0.125 inch wire. In some examples, the wire feeder 12 is configured to feed 1/8 inch wire and/or 3/32 inch wire.

A tachometer 50 or other sensor may be provided for detecting the speed of the first wire feeder motor 46, the rollers 47, or any other associated component so as to provide an indication of the actual wire feed speed. Signals from the tachometer 50 are fed back to the control circuit 32 such that the control circuit 32 can track the length of wire that has been fed. The length of wire may be used directly to calculate consumption of the wire and/or the length may be converted to wire weight based on the type of wire and its diameter.

When a spool 40 is installed, an operator may input information about the spool 40, for example via the operator interface 34. The control circuit 32 may receive this information and determine an initial amount of wire able to be fed from the spool 40, for example by weight or by length of wire. For example, the operator may input a spool serial number, and the control circuit 32 may determine a weight or length of wire by looking up the spool type in memory of the control circuit 32 or in an external database. In some examples, the user may input weight or wire length information and/or wire type information into the operator interface 34. The control circuit 32 can then track consumption of the wire, for example based on signals received from the tachometer 50.

The control circuit 32 may control the operator interface 34 to indicate when an amount of wire remaining in the spool40 is less than a threshold amount. An operator may then be aware that the spool 40 should be replaced soon. In some examples, the operator interface 34 may display an amount of wire (e.g., by weight or length) remaining in the spool. In some examples, the control circuit 32 may send a command to stop or disable a welding operation when an amount of wire remaining in the spool 40 is less than a threshold amount.

In some examples, the wire source 15 includes a sensor 41 to determine an amount of wire remaining in the spool 40. For example, the sensor 41 may be a scale to measure the weight of the wire spool 40. Signals from the scale 41 are fed back to the control circuit 32 such that the control circuit 32 can track a consumption of welding wire by weight. As described above, the operator interface 34 may display an amount of wire remaining in the spool 40 (e.g., by weight or length) and/or indicate when an amount of wire remaining in the spool 40 is less than a threshold amount. In some examples, the control circuit 32 may send a command to stop or disable a welding operation when an amount of wire remaining in the spool 40 is less than a threshold amount. In some examples, rather than a scale, the sensor 41 may be a light sensor which measures approximately how much wire is left in the spool. In some examples, a light sensor may determine when an amount of wire remaining on the spool is less than a threshold amount. In some examples, multiple light sensors may be used to determine when the amount of wire remaining is at various threshold amounts.

FIG. 2 illustrates an example implementation of the portable wire feeder 12 and the portable wire source 15 of the welding system 100 of FIG. 1.

The example wire feeder 12 of FIG. 2 includes a freestanding feeder case 202. The feeder case 202 houses one or more drive rolls 204 and/or idle rolls 206 to drive welding wire to a welding torch, an actuator 208 to actuate the drive rolls 204, and/or a wire guide 210 to guide the wire received from the wire source 15 to the rolls 204.

The example wire source 15 includes a freestanding source case 212. The source case 212 is separately portable, and physically independent, from the wire feeder 12. The source case 212 houses a spool support 214 within the source case 212. The spool support 214 supports a spool 216 of welding wire, and allows the spool 216 to rotate to pay out the welding wire from the spool 216. In some examples, the spool support 214 is provided with a brake to resist rotation of the spool 216 to avoid paying out excess wire from the spool 216 due to residual momentum of the spool 216 after feeding has stopped.

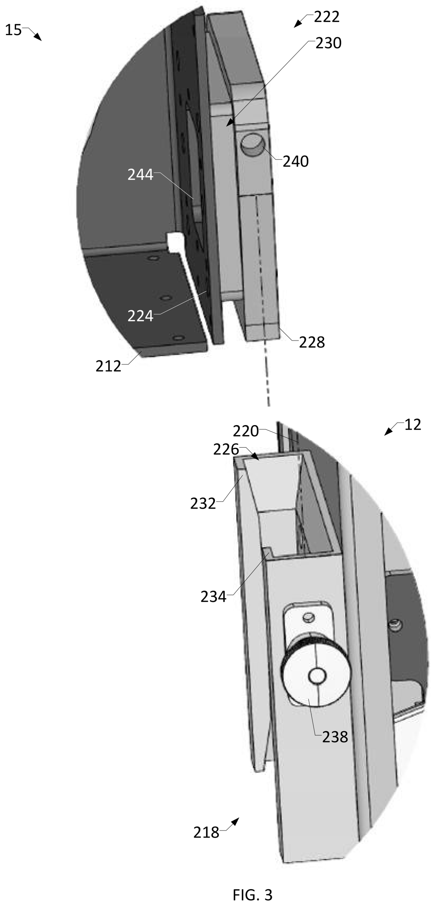

The example wire feeder 12 further includes a connector 218 on a first side 220 of the feeder case 202, and the wire source 15 further includes a connector 222 on a first side 224 of the source case 212 (e.g., the connectors 43 of FIG. 1). The connectors 218, 222 cooperate to mechanically connect the feeder case 202 to the source case 212. When the connectors 218, 222 are fully engaged (as discussed in more detail below), the wire source 15 may supply wire to the wire feeder 12 from the spool 216. FIG. 3 is a more detailed illustration of the connectors 218, 222 in a disengaged position.

The example connectors 218, 222 comprise a rail and slot configuration. In the illustrated example, the connector 218 of the wire feeder 12 is configured as a slot 226, and the connector 222 of the source 15 is configured as a rail 228 that engages the slot 226 by sliding into the slot in one direction. The example rail 228 includes one or more undercut features 230 that are retained by edges 232, 234 to limit movement of the rail 228 in a direction 252 away from the first side 220 of the feeder case 202.

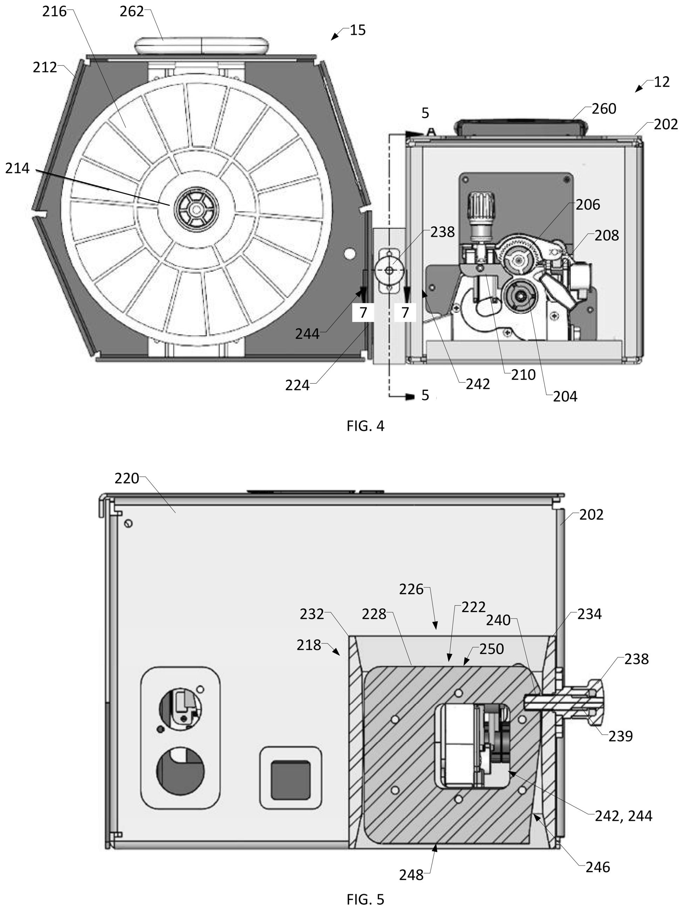

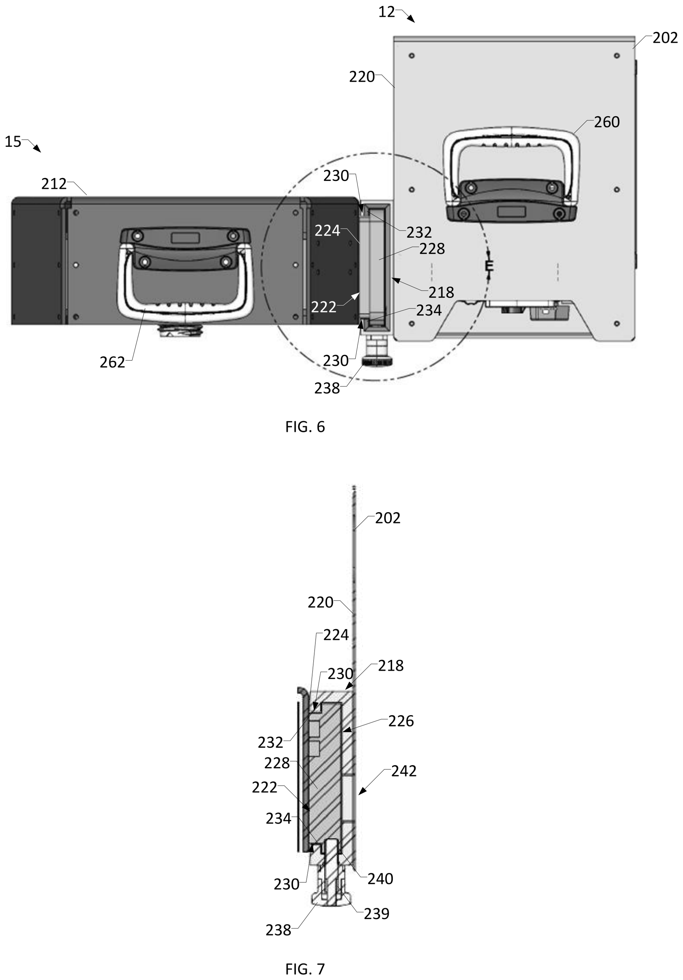

The example wire feeder 12 further includes a releasable lock 236 that may be engaged to secure the rail 228 and the slot 226 against disengagement. FIG. 4 is a side cross-section elevation view of the portable wire feeder 12 and the portable wire source 15 of FIG. 2 while the connectors 218, 222 are in an engaged position. FIG. 5 is a front cross-section elevation view of the connectors 218, 222 of FIG. 2 while the connectors 218, 222 are in an engaged position. FIG. 6 is a top plan view of the portable wire feeder 12 and the portable wire source 15 of FIG. 2 while the connectors 218, 222 are in an engaged position. FIG. 7 is a top cross-section plan view of the connectors 218, 222 of FIG. 2.

In the example of FIGS. 2-5, the releasable lock 236 includes a spring-loaded plunger 238 attached to the slot 226. When the rail 228 is fully inserted into the slot 226, the plunger 238 engages a locking hole 240 in the rail 228. While the plunger 238 is engaged in the locking hole 240, the rail 228 is locked by the plunger 238 against removal from the slot 226 and, as a result, the wire source 15 is locked against separation from the wire feeder 12.

To permit separation of the wire source 15 from the wire feeder 12, the user may pull the plunger 238 to disengage the plunger 238 from the locking hole 240, thereby permitting removal of the rail 228 from the slot 226 and separation of the wire source 15 from the wire feeder 12.

Additionally, when the connectors 218, 222 are fully engaged (e.g., the rail 228 is fully inserted into the slot 226), a wire inlet 242 of the wire feeder 12 and an outlet 244 of the wire source 15 are aligned to allow the source 15 to supply wire to the wire feeder 12 via the outlet 244 and the wire inlet 242. In the example of FIGS. 2-7, the outlet 244 and the wire inlet 242 are positioned within a circumference of the rail 228 and the slot 226. However, in other examples, the connectors 218, 222 may be moved to a different position, but the engagement of the connectors 218, 222 still results in alignment of the outlet 244 and the wire inlet 242.

To provide an easier engagement of the connectors 218, 222, the example rail 228 includes a tapered surface 246 as illustrated in FIG. 5. The tapered surface 246 result in a profile of the rail 228 that is thinner at the leading end 248 of the rail 228 that is inserted into the slot 226 first, and increases in width toward the trailing end 250. In some examples, the tapered surface 246 pushes the plunger 238 outward as the rail 228 is inserted into the slot 226, and the plunger 238 is biased (e.g., by a spring 239) to engage the hole 240 when the hole 240 aligns with the plunger 238.

In some examples, the wire source 15 includes a wire guide to guide the welding wire from the spool to the outlet. The wire guide may improve alignment of the wire with a wire guide and/or the rolls 204, 206 of the wire feeder 12, particularly when the spool support 214 is configured to support spools 216 having different diameters that can result in the wire being payed out from different radial positions of the spool support 214.

While the example releasable lock 236 of FIGS. 2-7 includes the plunger 238, in other examples the releasable lock 236 is implemented using other structures. For example, the releasable lock 236 may include a latch that is biased to engage the hole 240 or another aperture or similar feature of the rail 228. Additionally, while the example releasable lock 236 is coupled to the slot 226, in other examples the releasable lock 236 is coupled to the rail 228 and engages the slot 226 or other structure to secure the wire source 15 to the wire feeder 12. For example, a latch on the leading edge 248 of the rail 228 may be configured to releasably engage an edge or surface of the slot 226 when the rail 228 is fully inserted into the slot 226.

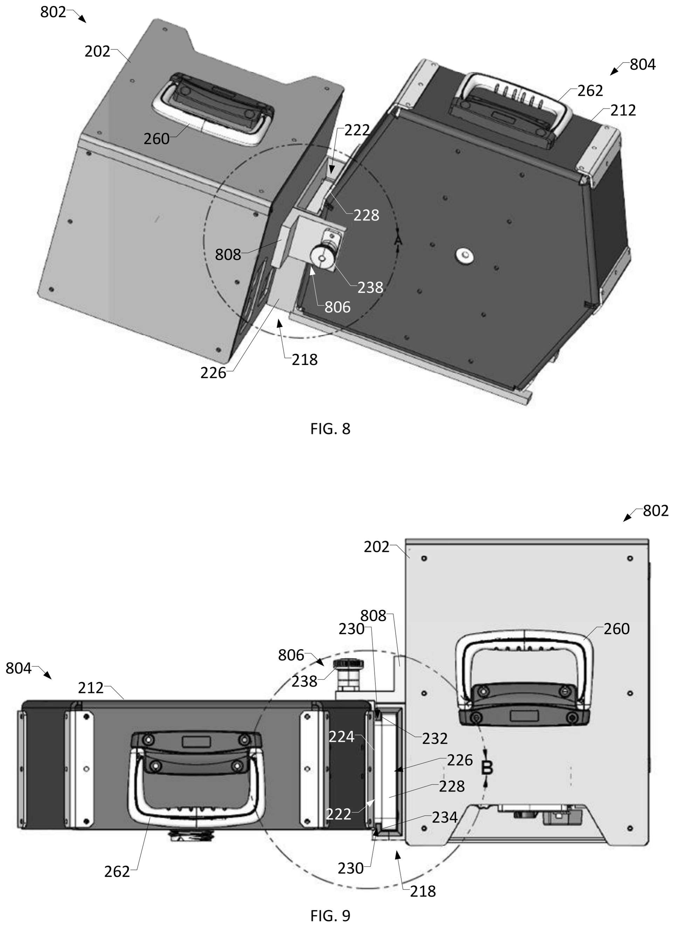

FIG. 8 is a perspective view of another example portable wire feeder 802 and portable wire source 804 that may be used to implement the welding-type system 100 of FIG. 1. FIG. 9 is a top plan view of the example the portable wire feeder 802 and the portable wire source 804 of the welding-type system of FIG. 1.

The example portable wire feeder 802 is similar to the wire feeder 12 of FIGS. 2-7, and the portable wire source 804 is similar to the wire source 15. In particular, the example wire feeder 802 includes the feeder case 202, the drive roll 204, the idle roll 206, the actuator 208 and the wire guide 210 described above. The example wire feeder 802 further includes the connector 218 (e.g., the slot 226) to couple the wire feeder 802 to the wire source 15, and the wire inlet 242 to receive the wire from the wire source 15.

The example wire source 15 includes the source case 212, the spool support 214, and may include the spool 216 mounted on the spool support 214. The wire source 15 further includes the connector 222 (e.g., the rail 228) to couple to the connector 218, and includes the outlet 244.

Instead of the example releasable lock 236 of FIGS. 2-7, the example wire feeder 802 of FIGS. 8 and 9 includes a releasable lock 806. The example releasable lock 806 includes a bracket 808 coupled to the feeder case 202, and a spring-loaded plunger 238 connected to the bracket 808. The example releasable lock 806 is configured to engage the source case 212, instead of engaging the rail 228, to secure the wire source 15 to the wire feeder 12. For example, instead of including a locking hole 240 in the rail 228, the source case 212 includes a locking hole 810 which is engaged by the plunger 238 when the connectors 218, 222 are fully engaged (e.g., the rail 228 is in a predetermined position with respect to the slot 226).

While the example releasable lock 236 of FIGS. 2-7 secures the slot 226 to the rail 228, and the releasable lock 806 couples the feeder case 202 to the source case 212, other examples may secure the feeder case 202 to the connector 222 (e.g., the rail 228), or couple the source case 212 to the connector 218.

As illustrated, each of the wire feeder case 202 and the source case 212 may include a handle (260 and 262 respectively) and/or wheels. The wheels may include braking or locking mechanisms (e.g., one or more wheels may be locking casters). The source case 212 may include a viewing window, such as a transparent or translucent material such than an operator can view the wire spool 216 when the source case 212 is closed. As an operator can view the spool 216 through the window, an operator is able to view the amount of wire remaining on the spool 216.

As the wire source 15 is connectable to the wire feeder 12, a new wire source 15 can be connected to the wire feeder 12 when the wire from the spool 216 is spent, or if a maintenance issue occurs with the wire source 15. For example, when the spool 216 is spent, an operator may disconnect the wire source 15 from the wire feeder 12 (e.g., disengage the releasable lock 236 and disengage the connector 222 from the connector 218 by sliding the rail 228 out of the slot 226) and connect a new wire source 15 to the wire feeder 12. Connecting a new wire source 15 to the feeder 12 may include manually feeding wire from the spool 216 through the outlet 244, through the connectors 218, 222, the wire inlet 242, and the wire guide 210 to the drive rolls 204 of the wire feeder 12. Additionally, an operator may place a new wire spool 216 in the wire source 15 when an old wire spool 216 is spent. To replace a spool 216 in the wire source 15, an operator manually feeds wire from the new spool 216 through the outlet 244, through the connectors 218, 222, the wire inlet 242, and the wire guide 210.

In some examples, an operator may have multiple wire sources (15), and can quickly replace one wire source with another when the wire spool 216 is spent. In some examples, the wire source housings 212 are stackable (e.g., multiple housings 212 can be stacked on top of each other), thereby minimizing space taken up by the multiple wire sources. In some examples, an operator can quickly switch from one wire source to another wire source (e.g., disconnect one wire source 15 from the wire feeder 12 and connect a different wire source 15). In some examples, the wire spool 216 may be locked in place on the spool support 214. For example, a locking mechanism or brake may prevent the spool 216 from spinning on the hub (e.g., which may occur without a locking mechanism when the wire source 15 is moved) except for when an operator manually feeds wire through the connectors 218, 222, or when the drive components of the feeder pull the wire (e.g., during welding or jogging).

In some examples, different wire sources 15 may include different wire types (e.g., wire size or material). For example, an operator may have two or more wire sources 15, each with a different wire type. Various welding operations may require the use of a different wire type. For example, one operation may require 1/8 inch wire while a second operation may require 3/32 inch wire. An operator may connect the wire source 15 including the appropriate wire type for the particular operation to the wire feeder 12. Then, when the operator performs a different second welding operation that requires a different wire type, the operator can disconnect the first wire source 15 from the wire feeder and connect a second wire source 15 to the wire feeder 12 that includes the appropriate wire type for the second welding operation.

The present methods and systems may be realized in hardware, software, and/or a combination of hardware and software. Example implementations include an application specific integrated circuit and/or a programmable control circuit. The present methods and/or systems may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or". As an example, "x and/or y" means any element of the three-element set {(x), (y), (x, y)}. In other words, "x and/ory" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

While the present method and/or system has been described with reference to certain implementations, it will be understood by those skilled in the art that various changes may be made and equivalents may be substituted without departing from the scope of the present method and/or system. For example, block and/or components of disclosed examples may be combined, divided, re-arranged, and/or otherwise modified. In addition, many modifications may be made to adapt a particular situation or material to the teachings of the present disclosure without departing from its scope. Therefore, the present method and/or system are not limited to the particular implementations disclosed. Instead, the present method and/or system will include all implementations falling within the scope of the appended claims, both literally and under the doctrine of equivalents.
Certain embodiments of the invention are described in the following clauses:
Clause 1. A portable wire feeder comprising:
   a freestanding feeder case having a wire inlet on a first side of the feeder case;
   a connector on the first side of the feeder case configured to connect the feeder case to a freestanding source case of a wire source, wherein the source case is physically independent from the feeder case and the feeder case is physically independent and separately portable from the source case, wherein the connector comprises a rail or a slot on an exterior of the first side of the feeder case, the rail or the slot configured to engage the other of the rail or the slot on a wire source housing by sliding the rail into the slot;
   a releasable lock configured to engage to secure the rail and the slot against disengagement, wherein the wire inlet is configured to receive wire from a connected wire source when the rail and the slot are fully engaged and the releasable lock is engaged;
   one or more drive rolls within the feeder case, the one or more drive rolls configured to drive the wire to a welding torch; and
   a wire guide configured to guide the wire received from the wire source to the one or more drive rolls.
Clause 2. The wire feeder of clause 1, wherein the slot comprises a tapered surface configured to guide the rail to a predetermined engaged position.
Clause 3. The wire feeder of clause 2, wherein the connector comprises the slot, and the releasable lock comprises a plunger coupled to the slot and biased to automatically engage when the rail is moved to the predetermined engaged position in the slot.
Clause 4. The wire feeder of clause 1, wherein the connector comprises the rail, and the releasable lock comprises an aperture configured to engage a plunger on the slot of the source case.
Clause 5. The wire feeder of clause 1, wherein the wire inlet is within a circumference of the slot, and the rail comprises an aperture to pass the wire through the connector to the wire inlet.
Clause 6. The wire feeder of clause 1, wherein the wire feeder is configured to receive between 0.030 inch wire and 0.125 inch wire from the wire source.
Clause 7. A portable welding wire spool housing comprising:
   a freestanding source case that is separately portable and physically independent from a portable wire feeder;
   a spool support within the source case, the spool support configured to support a spool of welding wire and to enable the spool to rotate to pay out the welding wire from the spool;
   an outlet to enable the welding wire to be withdrawn from the source case by the wire feeder;
   a connector on the first side of the source case configured to connect the source case to a freestanding feeder case of the wire feeder, wherein the connector comprises a rail or a slot on an exterior of the first side of the source case, the rail or the slot configured to engage the other of the rail or the slot on the feeder case by sliding the rail into the slot; and
   a releasable lock configured to engage to secure the rail and the slot against disengagement, wherein the outlet is configured to pay out wire when the rail and the slot are fully engaged and the releasable lock is engaged.
Clause 8. The portable welding wire spool housing of clause 7, further comprising a sensor configured to determine an amount of welding wire remaining in the spool, wherein the sensor provides an indication to a control circuit when the amount of welding wire remaining is less than a threshold amount.
Clause 9. The portable welding wire spool housing of clause 7, wherein the slot comprises a tapered surface configured to guide the rail to a predetermined engaged position.
Clause 10. The portable welding wire spool housing of clause 9, wherein the connector comprises the slot, and the releasable lock comprises a plunger coupled to the slot and biased to automatically engage when the rail is moved to the predetermined engaged position in the slot.
Clause 11. The portable welding wire spool housing of clause 7, wherein the connector comprises the rail, and the releasable lock comprises an aperture configured to engage a plunger on the slot of the source case.
Clause 12. The portable welding wire spool housing of clause 7, wherein the outlet is within a circumference of the slot, and the rail comprises an aperture to pass wire through the connector to a wire inlet of the wire feeder.
Clause 13. The portable welding wire spool housing of clause 7, further comprising a wire guide configured to guide the welding wire from the spool supported on the spool support to the outlet.
Clause 14. The portable welding wire spool housing of clause 7, wherein the source case does not include a motor.
Clause 15. A wire feeding system, comprising:
   a wire source housing comprising:
      a freestanding source case;
      a spool support within the source case configured to support a welding wire spool; and
      a first connector on the first side of the source case, comprising at least one of:
         a rail on an exterior of the first side of the source case; or
         a slot on the exterior of the first side of the source case;
   a wire feeder comprising:
      a freestanding feeder case;
      one or more drive rolls within the feeder case, the one or more drive rolls configured to drive wire to a welding torch; and
      a second connector configured to connect to the first connector, the second connector comprising the other of the rail or the slot, wherein the rail is configured to engage the slot by sliding the rail into the slot; and
   a releasable lock configured to engage to secure the wire source housing and the wire feeder against disengagement.
Clause 16. The wire feeding system of clause 15, wherein the slot comprises a tapered surface configured to guide the rail to a predetermined engaged position.
Clause 17. The wire feeding system of clause 15, wherein the wire feeder comprises the slot, the wire source housing comprises the rail, and the releasable lock comprises a plunger coupled to the slot and biased to automatically engage when the rail is moved to a predetermined engaged position in the slot.
Clause 18. The wire feeding system of clause 15, wherein the wire feeder comprises the rail, the wire source housing comprises the slot, and the releasable lock comprises a plunger coupled to the slot and biased to automatically engage when the rail is moved to a predetermined engaged position in the slot.
Clause 19. The wire feeding system of clause 15, wherein the wire source housing comprises an outlet through which the wire is payed out of the wire source housing, and the wire feeder comprises a wire inlet through which the wire is fed into the wire feeder, and the outlet is aligned with the wire inlet when the slot is fully engaged into the rail.
Clause 20. The wire feeding system of clause 19, wherein the wire inlet and the outlet are positioned within a circumference of the slot.

## Claims

1. A portable wire feeder comprising:
a freestanding feeder case having a wire inlet on a first side of the feeder case;
a connector on the first side of the feeder case configured to connect the feeder case to a freestanding source case of a wire source, wherein the source case is physically independent from the feeder case and the feeder case is physically independent and separately portable from the source case, wherein the connector comprises a rail or a slot on an exterior of the first side of the feeder case, the rail or the slot configured to engage the other of the rail or the slot on a wire source housing by sliding the rail into the slot;
a releasable lock configured to engage to secure the rail and the slot against disengagement, wherein the wire inlet is configured to receive wire from a connected wire source when the rail and the slot are fully engaged and the releasable lock is engaged;
one or more drive rolls within the feeder case, the one or more drive rolls configured to drive the wire to a welding torch; and
a wire guide configured to guide the wire received from the wire source to the one or more drive rolls.

2. The wire feeder of claim 1, wherein the slot comprises a tapered surface configured to guide the rail to a predetermined engaged position.

3. The wire feeder of claim 2, wherein the connector comprises the slot, and the releasable lock comprises a plunger coupled to the slot and biased to automatically engage when the rail is moved to the predetermined engaged position in the slot.

4. The wire feeder of claim 1, wherein the connector comprises the rail, and the releasable lock comprises an aperture configured to engage a plunger on the slot of the source case.

5. The wire feeder of claim 1, wherein the wire inlet is within a circumference of the slot, and the rail comprises an aperture to pass the wire through the connector to the wire inlet or wherein the wire feeder is configured to receive between 0.030 inch wire and 0.125 inch wire from the wire source.

6. A portable welding wire spool housing comprising:
a freestanding source case that is separately portable and physically independent from a portable wire feeder;
a spool support within the source case, the spool support configured to support a spool of welding wire and to enable the spool to rotate to pay out the welding wire from the spool;
an outlet to enable the welding wire to be withdrawn from the source case by the wire feeder;
a connector on the first side of the source case configured to connect the source case to a freestanding feeder case of the wire feeder, wherein the connector comprises a rail or a slot on an exterior of the first side of the source case, the rail or the slot configured to engage the other of the rail or the slot on the feeder case by sliding the rail into the slot; and
a releasable lock configured to engage to secure the rail and the slot against disengagement, wherein the outlet is configured to pay out wire when the rail and the slot are fully engaged and the releasable lock is engaged.

7. The portable welding wire spool housing of claim 6, further comprising a sensor configured to determine an amount of welding wire remaining in the spool, wherein the sensor provides an indication to a control circuit when the amount of welding wire remaining is less than a threshold amount.

8. The portable welding wire spool housing of claim 6, wherein the slot comprises a tapered surface configured to guide the rail to a predetermined engaged position.

9. The portable welding wire spool housing of claim 8, wherein the connector comprises the slot, and the releasable lock comprises a plunger coupled to the slot and biased to automatically engage when the rail is moved to the predetermined engaged position in the slot.

10. The portable welding wire spool housing of claim 6, wherein the connector comprises the rail, and the releasable lock comprises an aperture configured to engage a plunger on the slot of the source case, or wherein the outlet is within a circumference of the slot, and the rail comprises an aperture to pass wire through the connector to a wire inlet of the wire feeder.

11. The portable welding wire spool housing of claim 6, further comprising a wire guide configured to guide the welding wire from the spool supported on the spool support to the outlet.

12. The portable welding wire spool housing of claim 6, wherein the source case does not include a motor.

13. A wire feeding system, comprising:
a wire source housing comprising:
a freestanding source case;
a spool support within the source case configured to support a welding wire spool; and
a first connector on the first side of the source case, comprising at least one of:
a rail on an exterior of the first side of the source case; or
a slot on the exterior of the first side of the source case;
a wire feeder comprising:
a freestanding feeder case;
one or more drive rolls within the feeder case, the one or more drive rolls configured to drive wire to a welding torch; and
a second connector configured to connect to the first connector, the second connector comprising the other of the rail or the slot, wherein the rail is configured to engage the slot by sliding the rail into the slot; and
a releasable lock configured to engage to secure the wire source housing and the wire feeder against disengagement.

14. The wire feeding system of claim 13, wherein the slot comprises a tapered surface configured to guide the rail to a predetermined engaged position, or wherein the wire feeder comprises the slot, the wire source housing comprises the rail, and the releasable lock comprises a plunger coupled to the slot and biased to automatically engage when the rail is moved to a predetermined engaged position in the slot, or wherein the wire feeder comprises the rail, the wire source housing comprises the slot, and the releasable lock comprises a plunger coupled to the slot and biased to automatically engage when the rail is moved to a predetermined engaged position in the slot.

15. The wire feeding system of claim 13, wherein the wire source housing comprises an outlet through which the wire is payed out of the wire source housing, and the wire feeder comprises a wire inlet through which the wire is fed into the wire feeder, and the outlet is aligned with the wire inlet when the slot is fully engaged into the rail, and optionally
wherein the wire inlet and the outlet are positioned within a circumference of the slot.
